# EUROPEAN PATENT APPLICATION

(11) **EP 1 022 925 A2**
(43) Date of publication of application: **26.07.2000**
(21) Application number: 00300105.4
(22) Date of filing: 10.01.2000
(51) Int. Cl.: H04Q 11/04

(54) **Methods and apparatus for specifying performance for multimedia communications**

(30) Priority: 19.01.1999 US 116269 P; 15.07.1999 US 353594
(71) Applicant: AT&T Corp., New York, NY 10013-2412 (US)
(72) Inventor: Roy, Radhika R., Howell, New Jersey 07731 (US)
(74) Representative: Suckling, Andrew Michael

(57) **Abstract**

A network performance specifying device that specifies guaranteed, controlled or unspecified service classes for multipoint, multimedia communication services. The network performance specifying device permits an end-user to differentiated multimedia communication services (e.g., high quality to low quality and high cost to low cost) as may be specified via a standard set of parameters to instruct underlying transport layers to provide corresponding services that result in guaranteed quality of service for the end-user. This standard set of parameters allows end-users to select service classes for each type of media which guarantee a predetermined level of quality.

## Description

This non-provisional application claims the benefit of U.S. Provisional Application No. 60/116,269 entitled "H.323 Differentiated Service Protocol Architectures" which was filed on January 19, 1999 and is hereby incorporated by reference in its entirety. The Applicant of the provisional application is Radhika R. Roy (Attorney Docket No. ROY 18).

### BACKGROUND OF THE INVENTION

### 1. Field of Invention

This invention relates to methods and apparatus for specifying network performance.

### 2. Description of Related Art

Currently, multimedia standards, such as International Telecommunications Union (ITU) H.323 conferencing services standard, facilitate multimedia communication services over packet-based networks, such as Internet Protocol (IP), asynchronous transfer mode (ATM) networks, frame relay networks, and the like. The underlying architectural assumptions of the multimedia standards are extremely flexible and do not specify parameters for the transport layer. Thus, end-user devices that communicate based on the multimedia standards cannot provide a quality of service for various communication media, e.g., audio, video and/or data, transfer. Accordingly, there is a need for new technology for specifying quality of service.

### SUMMARY OF THE INVENTION

The invention provides methods and apparatus for specifying guaranteed, controlled or unspecified service classes for multipoint, multimedia communication services. Differentiated multimedia communication services (e.g., high quality to low quality and high cost to low cost) as may be specified via a standard set of parameters to permit underlying transport layers to provide corresponding services that result in guaranteed quality of service for the end-user. This standard set of parameters allows subscribers to select service classes for each type of media that guarantee a predetermined level of quality.

### BRIEF DESCRIPTION OF THE DRAWINGS

The invention will be described with reference to the accompanied drawings, wherein like numbers reference like elements, and wherein:
Fig. 1 is a block diagram of an exemplary performance specifying system;
Fig. 2 is an exemplary block diagram of the network of Fig. 1;
Fig. 3 is an exemplary block diagram of a more specific system architecture;
Fig. 4 is an exemplary block diagram of a network control device of Fig. 1;
Fig. 5 is an exemplary flowchart outlining a process for controlling the network;
Fig. 6 is an exemplary block diagram of a terminal of Fig. 1; and
Fig. 7 is an exemplary flowchart outlining a process for specifying network performance.

### DETAILED DESCRIPTION OF PREFERRED EMBODIMENTS

The present invention provides a way for a subscriber to request a quality of service level at which the subscriber would like to have a communication sent across an IP network. The quality of service level is based on a set of standard parameters which filly specify communication requirements across all of the underlying networks. For example, audio communications require a minimum bandwidth, delay and error rate in order for the audio data to sound continuous and non-distorted. Likewise, a video communication requires a minimum bandwidth, delay and error rate in order for a video image to be sufficiently updated and thereby create a smooth and flowing video picture reproduction. Accordingly, by assuring a subscriber a minimum quality of service level, a subscriber can select a service level for a particular communication which is commensurate with the subscriber's cost and performance objectives.

In order to specify a quality of service for multimedia communications, a subscriber can send a request to a network based entity or another subscriber which specifies a particular quality of service by using a standardized set of parameters. The network based entity can then access a database to determine if the network (i.e., various combinations of underlying networks) or a multipoint control unit (MCU) can provide the requested quality of service at that time. If so, the subscriber is connected with a destination terminal through the network in such a manner as to provide the subscriber with the requested quality of service. If the network cannot provide the requested quality of service, then the subscriber can be denied a connection over the network and given other possible qualities of service that are currently available. Additionally, the subscriber can be provided with a schedule of past, current or expected availability of the services over the network.

In contrast to a switched network, a packet network takes advantage of a plurality of interconnected underlying networks to transmit information in data packets, each of which may traverse a different path through the network. During communication over a switched network, a fixed connection between the terminals is formed. Once connected, the fixed connection guarantees a quality of service between the originating and destination terminals, such as a data transfer rate of 64 Kbits/sec. However, such a quality of service is difficult to provide in a packetized network because no fixed connection is established.

The data packets in a packet network are completely self-contained. The data packets are independently sent over the underlying networks where generally, the data packets are sent in accordance with a "best effort" protocol. Once the individual data packets reach the destination terminal they are re-assembled into the original communication for display.

As a result of the data packets being routed along numerous paths through numerous underlying networks under the "best effort" scheme, different data packets can be subjected to different types of distortion, such as delay, and error rates or data loss. The unpredictable routing, which imparts the various types of distortion upon the data packets as they travel across different underlying networks, makes the use of the packetized network for communication, such as audio, video or a combination thereof unreliable and of subordinate quality to a service provided by a switched network.

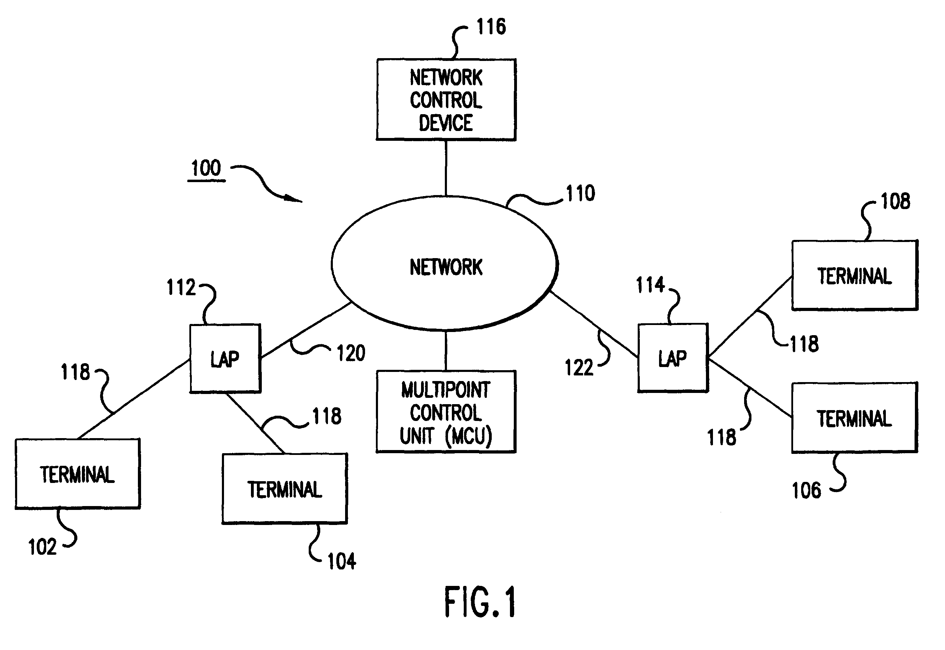

Fig. 1 is an exemplary block diagram of a communication system 100. The system 100 includes a plurality of terminals 102-108 in communication with a network 110 through Local Access Providers (LAPs) 112, 114. The LAPs 112, 114 may be any device that provides an interface to the network 110, such as company intranet servers, Internet Access Providers (IAPs), satellite base stations, cellular communication base stations and the like.

The communication system 100 further includes a network control device 116 connected with the network 110. The network control device 116 may perform network monitoring and control functions of the network 110. While the network control device 116 is shown as an independent unit coupled to the network 110, it can also be incorporated in the terminals 102-108, or may be distributed throughout the network 110. Any configuration that permits monitoring of the network 110 in order to determine whether a requested quality of service is available can be used without departing from the spirit and scope of the present invention.

The terminals 102-108 can be devices of any type that allow for the transmission and/or reception of communication signals. For example, the terminals 102-108 can be land-line telephones, cellular telephones, computers, personal digital assistants, video telephones, video conference apparatuses, smart or computer assisted televisions, Web TV™ and the like. For the purposes of the following description of the present invention, it will be assumed that terminals 102-108 are personal computers.

The terminals 102-108 are in communication with the network 110 over communication links 118. These communication links 118 may be any type of connection that allows the transmission of information. Some examples include conventional telephone lines, fiber optic lines, direct serial/parallel connection, cellular telephone connections, satellite communication links, local area networks (LANs) intranets and the like.

The multipoint communications unit (MCU) 130 provides multimedia bridging for audio, video, and/or data communications between multiple subscribers and is also involved for specifying performance or quality of service (QOS) parameters. For example, MCU 130 should be capable of processing all media for bridging and sending back to subscribers in accordance to the quality of service specified at the time of negotiation of the call. Network control device 116 may come into play to specify the quality of service for MCU 103, or MCU 130 may directly be involved to specify the quality of service. The end-to-end quality of service should be taken into consideration for both the quality of service of the MCU(s) as well as the network(s).

If there is a congestion within the MCU 103, negotiations may take place whether somewhat lower quality of service is acceptable if the full quality of service requested by subscribers are not acceptable. In extreme circumstances, if MCU 103 cannot handle any more communication traffic, the traffic may not be accepted. In another situation, if subscribers are willing to accept whatever quality of service is provided in the best effort mode, MCU 130 will process the call with the effort to provide as much quality of service as possible without providing any guarantee.

Terminals (102, 104, 106, 108), network control device 116, MCU 130, and other functional entities will constitute communications entities that will communicate at the application layer that resides logically above the network layer (e.g., IP, ATM, FR, etc.). For example, H.323 entities of ITU recommendation H.323 reside above the transport layer.

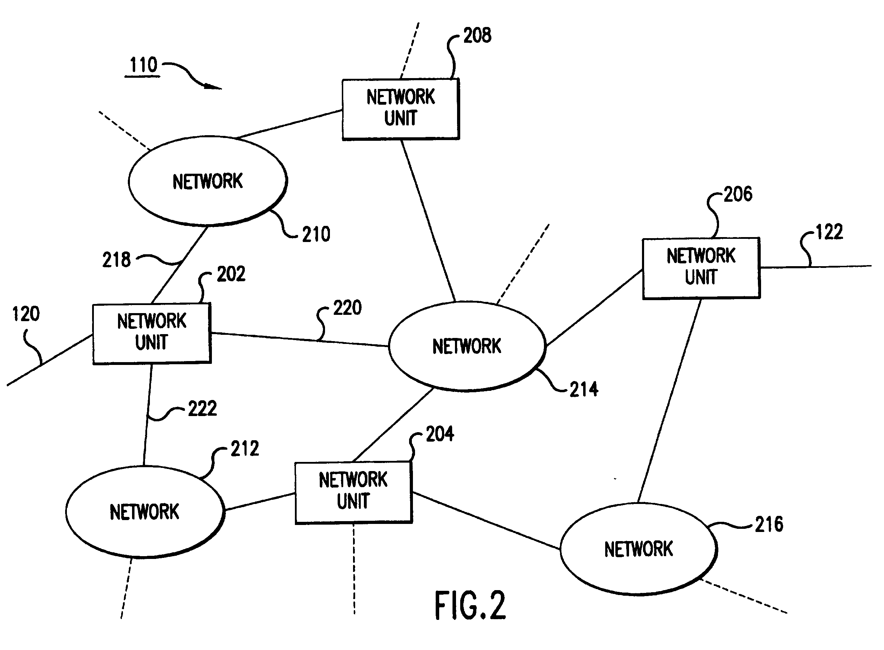

Fig. 2 shows a possible detailed diagram of the network 110 which may include network units 202-208 and networks 210-216, for example. The LAP 112 is coupled to the network unit 202 via the link 120 and the LAP 114 is coupled to the network unit 206 via the link 122. The network units 202-208 may be servers, network control units, multipoint control units (MCU), or routers of the network 110 and the networks 210-216 may be various different types of networks that are integrated together with the network units 202-208 to form the network 110. For example, the network 110 may include a mix of network types that support data transmission via data packets, frames, or switches; analog or digital, wired or wireless transmissions; or the networks may be LANs or WANs such as token ring, ethernet, X.25, ATM, etc.

As may be appreciated from the above, each of the possible networks 210-216 may require very different parameters to specify a particular desired performance. In addition, data packets of a single communication may traverse many different types of networks 210-216 en route to a destination. Thus, the difficulty of specifying a quality of service with a standard set of network parameters by an end-user is greatly aggravated.

Furthermore, because of the different qualities of the individual networks 210-216, data packets passing through different networks 210-216 experience different qualities of transmission. For example, at any given time, one of the networks 210-216 can have a delay, bit-rate, error rate or the like different from an other one of the networks 210-216. The overall effect of data packets being exposed to differing network characteristics is to render the quality of service unpredictable. Consequently, in order to make a guaranteed quality of service possible over packet networks, a set of standard network parameters must be obtained that is meaningful for each type of media (e.g., audio, video, text, etc.) and meaningful for each type of the networks 210-216.

This invention provides the needed standard set of network parameters discussed above so that an end-user may specify quality of service and the networks 210-216, forming the transport layer, may execute the quality of service specification to achieve a wide range of qualities of service from guaranteed service to a best effort service. The set of standardized parameters are generated based on an analysis of requirements for each media type and analysis of network characteristics, as discussed in detail below.

**Table 1**

| **STANDARD PERFORMANCE PARAMETER** | **DESCRIPTION** |
|---|---|
| PBR | Peak Bit Rate |
| SBR | Sustained Bit Rate |
| MBS | Maximum Burst Size |
| MBR | Minimum Bit Rate |
| BER | Bit Error Rate |
| EED | End-to-End Delay |
| EEDV | End-to-End Delay Variation |

Table 1 is a listing of possible standard parameters. The peak bit rate (PBR) is the maximum bit rate which a network must be capable of transporting in order to satisfy the end-users quality of service requirements.

The sustained bit rate (SBR) is an average bit rate which the end-user wants to send over the network 110.

The maximum burst size (MBS) is the maximum continuous bit rate for a given duration that the end-user can send at the PBR.

The minimum bit rate (MBR) is the minimum bit-rate which a network must be capable of transporting in order to satisfy an end-user's quality of service requirements.

The bit-error rate (BER) is the combined error rates contributed by both random bit error rate and in the transport networks as well as packet loss which occurs when packets are transferred over the network. The random bit error rate of the transport facility remains almost fixed for a given network, while the packet loss rate over the packet-based transport network can be controlled through various control mechanisms. Therefore, the bit error rate parameters should primarily be a measure of the bit errors that are caused due to the packet losses and the random bit errors of the transmission facilities.

The end-to-end delay (EED) is the time elapsed between the transmission of a bit (or a message, a cell, or a packet) of a given medium from a sending entity and the reception of the same bit (or the same message, packet, or cell) of that medium to a receiving entity.

The end-to-end delay variation (EEDV) is the difference between the end-to-end delay of a bit (or a message, a cell, or a packet) of a given medium. The EEDV is also known as delay jitter.

The various types of communication (i.e., audio, video, and data) are now discussed with reference to their corresponding standard network parameters. The description of each communication type is further described in Table 2.

Analog audio signals are translated into digital signals via audio codecs. The audio codec performance parameters are considered primarily from the end-user's point of view and include bit-rate, delay, and speech quality. Codec speech quality is a function of bit-rate, coding complexity, and processing delay. However, bit-rate, delay and errors (bit error rate and packet loss rate) appear to be the primary concern for the end-to-end communications. In addition, the network connecting the codecs should also be taken into account for end-to-end communications.

The audio codecs (G.711, G.722, G.732.1, or G.729) used in network architectures have the characteristics of constant bit-rate (CBR). In order to reduce the average bit-rate of audio signals, voice activation may be provided. Each of the codecs exhibits a certain processing delay. The end-to-end delay will include both processing delay and network delay. The tightly constrained time-sensitive CBR codec can support very little variation in delay. The audio quality defined in means option score (MOS), among many other factors, is a function of delay, delay variation (or delay jitters) and errors (bit errors and packet losses) for a given bit-rate.

The variable bit-rate (VBR) audio codec may also be included as part of the network architecture because VBR codecs provide better performance along with efficient statistical multiplexing capability over the packet-based network. The traffic of the VBR codec can be characterized as a time varying rate constrained with a peak bit-rate (PBR) and avenge bit-rate defined by the sustained bit-rate (SBR) and maximum burst size (MABS) expressed in bits. The MBS is the maximum (approximating) continuous bit-rate that the audio source can send at the PBR. Like the CBR codec, the traffic of the VBR audio codec is also time-sensitive and needs constrained delay and delay variation requirements.

In a similar manner to audio, video performances for real-time communications are also considered primarily from the end-users end-to-end delay point of view. Like audio, the main performance parameters for video that affect the end-user are also bit-rate, delay, and video quality. The delay, delay variations (or delay jitters) and errors (bit errors and packet losses) are the primary concern for the video quality.

Terminals providing video communications may be capable of encoding and decoding video according to H.261, H.263, or the like. The video bit-rate, picture format, and algorithm options that can be accepted by the decoder can be negotiated. Terminals should be capable of operating in asymmetric video bit-rates, frame rates, and if more than one picture resolution is supported.

However, both H.261 and H.263 codec produce a time-sensitive video of constant bit-rate (CBR). Like audio, the video quality is expressed in mean option score (MOS) and is also dependent on delay, delay variations (or delay jitters), and errors (bit errors and packet losses) for a given bit-rate.

Unlike H.261, H.263 can provide a layered video coding as well. The base layer and the enhancement layers are defined for achieving scalability (bandwidth, temporal, signal-to-noise (SNR), and/or spatial) as well as for servicing the end points that have different capabilities, using one bit stream and better performance in view of bit error/losses. Again, the traffic characteristic of each layered video is CBR.

Like audio, video can also be transferred as a variable bit-rate (VBR) using the VBR codec to provide the better performance. As explained above, the time-sensitive traffic of the VBR video can be described using the three parameters: PBR, SBR, and MBS. Like CBR, the end-to-end delay and delay variation (or delay jitter) are also the prime constraints for the VBR video.

Data traffic created by applications and system control is of non-real-time VBR category that has no constraints on delay and delay variation. The bit-rates for the data traffic may vary from a few kilobytes to multi gigabytes per second. Like the real-time audio and video, the data traffic can also be compressed, but the bit-rates still have variable rate and bursting characteristics. The traffic pattern is characterized by the same parameters (PBR, SBR, and MBS) like those of the time-sensitive real-time VBR audio and video.

It has been seen that non-time-sensitive data applications (e.g., still image, file transfers) can also change their transmission rate in response to the rate-based network feedback used in the context of the closed-loop flow control. In this situation, the source applications can work in cooperation with the network following the feedback. As a result, the application can request additional bandwidth from the network dynamically (if the network finds that the additional requested bandwidth that is not currently being used by the already contracted services can be allocated) because it can adjust its transmission rate based on the feedback provided by the network. In this kind of service, the application specifies the peak bit-rate (PBR) and the minimum bit-rate (MBR) where the MBR is only guaranteed. It is up to the application to decide what the value of the MBR should be at the beginning of the session. The traffic characteristics of this kind of application are termed the available bit-rate (ABR). ABR mechanisms are expected to increase the operational performance of the applications as well as to maximize the efficiency of the available network resources.

Shown below in Table 2 are the various communication types along with the corresponding network parameters that are required to describe the various communication types.

**Table 2**

| **Communication Type** | **Traffic Characteristics** | **QOS Parameters** | | | | | | |
|---|---|---|---|---|---|---|---|---|
| | | **Bitrate Parameters (Guarantees Desirable)** | | | | **End-to-End Delay/Delay-Variation/Bit- Error-Rate Parameters (Guarantees Desirable)** | | |
| Audio/Video | CBR | PBR | - | - | - | Delay | Delay Variation | Bit Error Rate |
| (Real-Time) | Constant Bitrate | | | | | | (Delay Jitter) | |
| Audio/Video | VBR | PBR | SBR | MBS | - | Delay | Delay Variation | Bit Error Rate |
| (Real-Time) | Variable Bitrate | | Sustained Bitrate | Sustained PBR | | | (Delay Jitter) | |
| | | | | Max Burst Size | | | | |
| Data | VBR | PBR | SBR | MBS | - | - | - | Bit Error Rate |
| (Non-Real-Time) | Variable Bitrate | | | | | | | |
| Data | ABR | PBR | - | - | MBR | - | - | Bit Error Rate |
| (Non-Real-Time) | | | | | Minimum Bitrate | | | |

As can be seen from Table 2, in a network architecture, service classes or levels can be defined by varying the two main groups of parameters: bitrate and delay/delay-variation/bit-error-rate. The combinations of different levels of guarantees of each parameter of bitrate and delay/delay-variation/bit-error rate can be created to define the multimedia service classes. Accordingly, a subscriber can then use any one of these service classes to communicate over network 110 at a quality of service that seems to be appropriate considering the cost and performance trade-offs. A network service provider can also provide services to meet the appropriate service class that corresponds with bitrate and delay/delay-variation/bit-error-parameters that provide an appropriate level of guarantee for each parameter to meet the requirements.

While Table 2 shows the desired traffic and quality of service characteristics for all media of the network architecture, the media may be divided into two kinds of communication: time-sensitive, real-time and non-time-sensitive, non-real-time. The quality of service parameters can also be separated into two parts: bitrate and delay/delay-variation/bit-error-rate. Analyzing the impact of these parameters on the services that subscribers can request for differentiation, they may categorized into different classes. Tables 3 and 4 show the bitrate and delay-error classes, respectively. A quality of service class will be uniquely specified as a combination of the specific bitrate class (BRC) and the delay-error class (DEC).

Shown below in Table 3 are the various bitrate classes along with the corresponding network parameters which must be specified in order to define a particular bitrate class.

**Table 3**

| **Bitrate Class (BRC)** | **Bitrate Parameters** | | | |
|---|---|---|---|---|
| | **PBR** | **SBR** | **MBS** | **MBR** |
| **1** | Specified | Not Specified | Not Specified | Not Specified |
| **2** | Specified | Specified | Specified | Not Specified |
| **3** | Specified | Not Specified | Not Specified | Specified |
| **4** | Specified (Not subject to any kind of call admission control or usage parameter control procedures) | Not Specified | Not Specified | Not Specified |

The first row of Table 3 defines bitrate class 1. In bitrate class 1, only the peak bitrate (PBR) is specified while the sustained bitrate (SBR), maximum burst size (MBS) and the minimum bitrate (MBR) are not specified. Bitrate class 1 corresponds to the constant bitrate (CBR) based audio and video type communication described in Table 2.

In bitrate class 2, the PBR, SBR and MBS are specified while the MBR is not specified. Bitrate class 2 corresponds to the variable bitrate (VBR) based audio and video communication types as described in Table 2.

In bitrate class 3, the PBR and MBR are specified while the SBR and MBR are not specified. Bitrate class 3 corresponds to data type communications as described in Table 2.

In bitrate class 4, only the PBR is specified, however, the PBR is not subject to any kind of call admission control or usage parameter control. Bitrate class 4 may be used for such applications as e-mail or the like.

Shown below in Table 4 are the various delay-error classes (DECs) along with the corresponding parameters which must be specified in order define a delay-error class.

**Table 4**

| **Delay-Error Class (DEC)** | **End-To-End Delay (EED)/End-To-End Delay-Variation (EEDV)/ Bit-Error-Rate (BER) Parameter** | | |
|---|---|---|---|
| | **EED** | **EEDV** | **BER** |
| **1** | Specified | Specified | Specified |
| **2** | Specified | Specified | Not Specified |
| **3** | Not Specified | Not Specified | Specified |

The first row of Table 4 defines the delay-error class 1 (DEC 1). In the delay-error class 1 the end-to-end delay (EED), the end-to-end delay variation (EEDV) and the bit error rate (BER) are all specified. Delay-error class 1 corresponds to the constant bitrate (CBR) based audio and visual type communications described in Table 2.

In delay-error class 2, the EED and EEDV are specified while the BER is not specified. Delay-error class 2 corresponds to the constant bitrate (CBR) or variable bitrate (VBR) based audio and video type communications described in Table 2.

In delay-error class 3, only the BER is specified while the EED and EEDV are not specified. Delay-error class 3 corresponds to data type communications.

Using both the bitrate class (BRC) and the delay-error class (DEC) an application level service class can be uniquely specified by the subscriber to describe a quality of service class. The quality of service classes can be divided into three type classes: guaranteed service class (GSC), controlled service class (CSC) and unspecified service class (USC). Furthermore, there can be other variations in other quality of service parameters within a given service class and each service class can be divided into further subclasses.

Table 5 describes the guaranteed service class and corresponding subclasses which are defined by the various combinations of bitrate and delay-error rate classes. Table 5 further shows the quality of service parameters for the service class subclasses along with some example applications. The time-sensitive real-time applications like audio and video have the stringent delay and delay variation requirements, while the traffic characteristics can be CBR or VBR. However, these applications can tolerate some errors. The presence of the end-to-end delay (EED) and the end-to-end delay variation (EEDV) parameter will uniquely specify that this is a guaranteed service class. In classifying the guaranteed service class further, the differences in the CBR, VBR and/or BER parameters must be addressed. Based on these parameters, the guaranteed service class is divided further into subclasses.

**Table 5**

| **Guaranteed Services Class (GSC) [Example Real-Time Applications]** | **Guaranteed QOS Parameters** | | **Remarks** |
|---|---|---|---|
| | **Britrate Class (BRC)** | **Delay-Error Class (DEC)** | |
| **1** | **1** | **1** | |
| [CBR Audio, CBR Video] | (PBR) | (EED, EEDV, BER) | |
| **2** | **1** | **2** | Presence of the "Delay/Delay-Variation (i.e., Delay Jitter)" parameter will uniquely indicate that this is a "Guaranteed Service Class (GSC)" |
| [CBR Audio, CBR Video] | (PBR) | (EED, EEDV) | |
| **3** | **2** | **1** | |
| [Real-Time-VCR Audio, Real-Time-VBR Video] | (PBR, SBR, MBS) | (EED, EEDV, SBR) | |
| **4** | **2** | **2** | |
| [Real-Time-VBR Audio, Real-Time-VBR Video] | (PBR, SBR, MBS) | (EED, EEDV) | |

The first row of Table 4 defines the guaranteed service class 1. The guaranteed service class 1 includes bitrate class 1 and delay-error class 1. Guaranteed service class 1 corresponds to the constant bitrate-based audio and video type communications described in Table 1.

Guaranteed service class 2 is defined by bitrate class 1 and delay-error class 2. Guaranteed service class 2 corresponds to the constant bitrate based audio and video type communications described in Table 2, however, this is a special case when the subscriber may need not specify the BER requirements for the application.

Guaranteed service class 3 includes bitrate class 2 and delay-error class 1. Guaranteed service class 3 corresponds to the real-time variable bitrate (VBR) based audio and video type communications described in Table 2.

Guaranteed service class 4 includes bitrate class 2 and delay-error class 2. Guaranteed service class 4 corresponds to real-time variable bitrate (VBR) audio and video type communications described in Table 2, however, in this class the end-user need not specify the BER requirement for the application.

As described above, the guaranteed service class is a time-sensitive delay variation (i.e., delay jitter) intolerant real-time audio and video communication type that requires guaranteed service for the two-way communication between subscribers. The guaranteed service class only accepts or uses specific values for the delay and the delay variation (i.e., delay jitter) parameter in addition to other parameters. In other words, if the delay and the delay variation (i.e., delay jitter) parameter are not present, the service is not considered to be the guaranteed service class.

The guaranteed service class requires the reliable delivery of traffic maintaining the specified quality of service constraints on an end-to-end basis. The word "guaranteed" is not to be taken as an absolute state. In the context of the packet-based network, guaranteed can be approximated and imprecise to a certain extent in terms of delays and delay variations and bit error rates. The guaranteed service class can be defined as a predictable service that a subscriber can request for the duration of a particular communication session. The guaranteed service class can be requested by subscribers for applications like real-time interactive audio and video communication types where there is an inherent reliance on time synchronization based on accurate timing between the traffic source and the destination.

Next, the controlled service class will be described with reference to Table 6. In Table 6, the various controlled service classes 1-6 are described by the corresponding bitrate class and delay-error class quality of service parameters.

**Table 6**

| **Controlled Service Class (CSC)** | **QOS Parameters** | | **Remarks** |
|---|---|---|---|
| **[Example Applications]** | **Bitrate Class (BRC)** | **Delay-Error Class (DEC)** | |
| **1** | **2** | **3** | Absence of the "Delay/Delay-Variation (i.e., Delay Jitter)" parameter will uniquely indicate that this is a controlled Service Class (CSC)" |
| [T.120 (e.g., Still Image, File Transfer), Fax] | (PBR, SBR, MES) | (BER) | |
| **2** | **2** | (No parameter related to delay, delay variation or error is specified) | |
| [T.120 (e.g., Still Image, File Transfer), Fax] | (PBR, SBR, MBS) | | |
| **3** | **3** | **3** | |
| [T.120 (e.g., Still Image, File Transfer), Fax] | (PBR, MBR) | (BER) | |
| **4** | **3** | (No parameter related to delay, delay variation or error is specified) | |
| [T.120 (e.g., Still Image, File Transfer), Fax] | (PBR, MBR) | | |
| **5** | **4** | **3** | |
| [T.120 (e.g., Still Image, File Transfer), Fax] | (PBR) | (BER) | |
| **6** | **4** | (No parameter related to delay, delay variation or error is specified) | |
| [T.120 (e.g., Still Image, File Transfer), Fax] | (PBR) | | |

Controlled service class is for the non-time-sensitive, non-real-time data which does not require stringent guaranteed service especially for the induced delay and delay variation (i.e., delay jitter). This kind of application can have the ability to adapt to the network conditions. The applications can always wait for the bitstreams before the application has actually processed the information data to be sent.

Table 6 shows the quality of service characteristics for the controlled service subclasses along with some example applications. The non-real-time applications like t.120 (e.g., still images, file transfer, facsimiles) have the ability to adapt to the underlying transport network conditions. They do not have the stringent delay and delay variation requirements like the real-time audio or video applications. However, they have the bitrate requirements that are subject to the call admission control or usage parameter control procedures because of their ability to adapt to the network condition.

Occasionally, the available network resources may not always be able to meet the bitrate class and delay-error class requirements precisely. In an application a certain amount of delay or possibly more bit errors may be experienced at the application level due to the dropped packet/cells under congestion situations at the network/link layer. As a result, the originally requested bitrate class and delay-error class specifications may not be met precisely. The degree at which traffic may be dropped or delayed should be slight enough for the adaptive applications to function without noticeable or acceptable degradation.

The different categories of the controlled service class are classified so that both end-users can request further differentiating the services depending on the cost-performance trade-offs. The main purpose of the controlled service class is to characterize the traffic parameters to provide better performance than the unspecified service class (USC) using the best-effort. The controlled service class may be further divided by the difference in bitrate (PBR, SBR, MBS and MBR) and bit error rate (BER parameter requirements).

In row 1 the controlled service class 1 is defined by bitrate class 2 and delay-error class 3.

Controlled service class 2 is defined by bitrate class 2 while no delay-error class is specified.

Controlled service class 3 is defined by bitrate class 3 and delay-error class 3.

Controlled service class 4 is defined by bitrate class 3 while no delay-error class is specified.

Controlled service class 5 is defined by bitrate class 4 and delay-error class 3.

Controlled service class 6 is defined by bitrate class 4 while no delay-error class is specified.

Some networks, in certain situations, may not be able to provide guaranteed service of the real-time traffic and no guarantee of all quality of service parameters of the real-time traffic can be obtained on the end-to-end basis of the application level. In this case, the real-time traffic will be forced to be sent as the controlled service class. In this case, the real-time communication types like the audio and video communications can provide the traffic specifications containing the bitrate class and the delay-error-class parameters of the controlled service so that they can have the service better than the unspecified service class (best effort). In turn, the underlying transport network handling the controlled service requests ensures that sufficient resources are available to accommodate the request to offer services better than the unspecified service class. However, the PBR of the bitrate class 4 of the controlled service class is subject to the call admission or usage parameter control.

The unspecified service class is defined below in Table 7 by the corresponding bitrate and delay-error classes.

The unspecified service class includes bitrate class 4 and does not require a specified delay-error class. It is important to note that bitrate class 4 is not subject to any kind of call admission control or usage parameter control procedures. Unspecified service class 1 corresponds to communication types such as file transfers and facsimiles.

**Table 7**

| **Unspecified Service Class (USC) [Example Applications]** | **QOS Parameters** | | **Remarks** |
|---|---|---|---|
| | **Bitrate Class (BRC)** | **Delay-Error Class (DEC)** | |
| [T1.20 (e.g., File Transfer), fax] | **4** | (no parameter related to delay, delay variation or error is specified) | The presence of the PBR of bitrate class (BRC4) with no admission control and absence of any delay-error class (DEC)will uniquely indicate that this is an "Unspecified Service Class (USC)" |
| | (PBR) (Not subject to any kind of call admission control or usage parameter control procedures) | | |

Unspecified service class is used for when a subscriber does not wish to place the application subject to any kind of control by the underlying transport networks whether the signal peak bitrate (PBR) is greater than the rate of a link in the path (or is greater than the available bandwidth) or for any other reason and is ready to accept whatever services are provided by the underlying transport networks. That is, subscribers need not conform to the signaled PBR and the transport network may enforce a PBR different than the signaled PBR. However, the underlying transport network is not obliged to carry the traffic as it is signaled by the application and can enforce a different PBR or even may not carry the traffic at all. The unspecified service class is expected to be provided by the underlying transport networks using the best effort capability. The presence of bitrate class 4 (BRC4) with no call admission or usage parameter control and no specification of the delay-error class, will specify that this is the unspecified service class.

For example, the underlying transport networks may not be able to carry any traffic because the applications that are already being served have not left sufficient excess bandwidth to carry the traffic of this new unspecified service class application at its signaled PBR and can decide to carry a part of its signaled PBR. It may also so happen that no excess bandwidth is left within the underlying transport networks to carry the unspecified service class traffic and may not carry any traffic of this new application. In some situations, the transport network's policy may not even support the application that simply requests the unspecified service.

The unspecified service class can also be termed as the best-effort service where no quality of service parameter is guaranteed or controlled and the underlying packet/cell transport network makes an attempt to deliver the traffic successfully as far as practicable after delivering the guaranteed service class and the controlled service class traffic.

An example of the unspecified service class or best-effort delivery can be seen in today's service over the public Internet. All traffic, including even the time-sensitive real-time audio and video for the two-way conversations between subscribers is sent using the best-effort without providing any guarantee of any quality of service parameters.

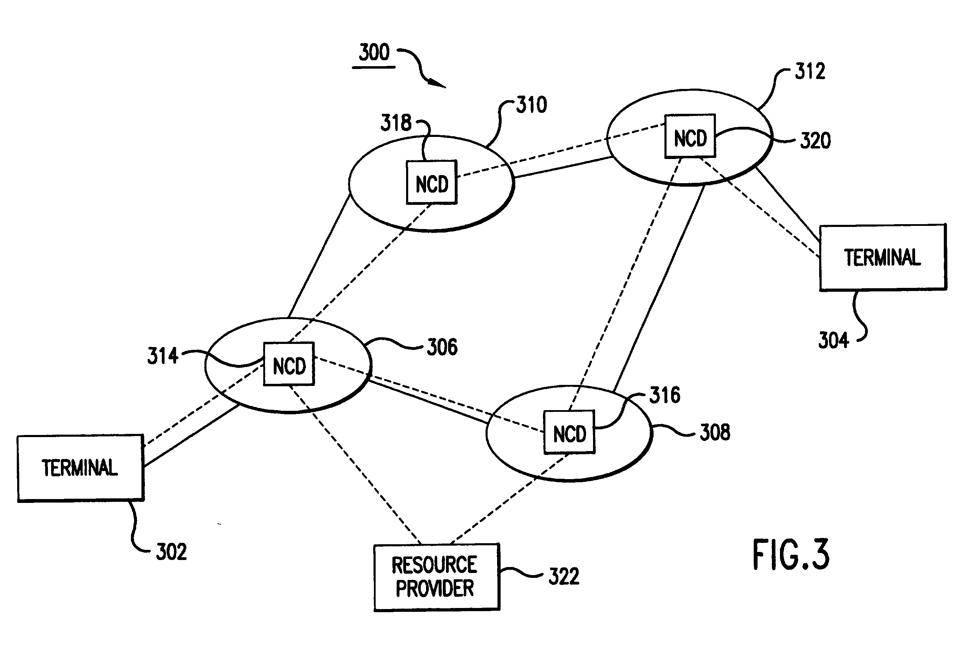

Fig. 3 shows a more specific example of the communication system 100 shown in Fig. 1. The communication system 300 includes terminals 302 and 304, administrative domains 306-312, network control devices 314-320 and a resource provider 322. All of the above devices are interconnected by signaling links, as indicated by broken lines, while the terminals 302, 304 and administrative domains 306-312 are connected by communication links, as indicated by solid lines.

By way of example, operation of the communication system 300 will be described. If terminal 302 wishes to establish an audio and video communication (i.e., video conferencing) with terminal 304, terminal 302 would first decide upon a level of quality at which to conduct the communication. Based on the terminals 302 end-user's cost and performance objectives, the end-user would request a quality of service. Since the communication is audio and video, high quality service is required. Accordingly, the end-user selects a guaranteed service class 1, where bit rate class 1 and delay-error class 1 are required.

A quality of service request is then sent from terminal 302 to network control device 314 over the signaling links. The quality of service request contains the desired level of quality of the communication service.

In response to the request, the network control device 314 queries the resource provider 322 which contains information on the available resources of the underlying networks within the administrative domains 306-312 to determine if the network can provide the quality of service defined by the request. If the network control device 314 determines that the network can provide the requested quality of service, then the network control device 314 will report back to the originating terminal 302 that the requested quality of service is granted and that communication can begin. However, if the network control device 314 determines that the network cannot provide the requested quality of service, then the network control device 314 will report to the originating terminal 302 that the request has been denied. In addition to a request denial, the network control device 314 can present the originating terminal 302 with a menu of alternative quality of services that are currently available over the network. The network control device 314 can also send the originating terminal 302 a schedule of past, present and future (expected) availability of communications on the network using various qualities of service.

To determine whether a requested quality of service can be provided, the network control device 314 queries the resource provider 322. If, for example, the terminal 314 is requesting a guaranteed service level having a peak bit rate of 100 Kbits/sec, the network control device 314 will access the resource provider 322 to determine if that level of communication can be supported between terminal 302 and terminal 304.

If, for example, a route consisting of the networks of administrative domains 306, 310, and 312 can support an additional 100 Kbits/sec of audio-video communication traffic between terminal 302 to terminal 304, the network control device 314 communicates over service signaling links with network control device 318 and network control device 320 to reserve resources necessary to conduct the requested communication.

Alternatively, if a link consisting of administrative domains 306, 310, and 312 cannot support the 100 Kbits/sec communication traffic of terminal 302 because administrative domain 310 can only support 70 Kbits/sec of additional communication traffic, the network control device 314 may access resource provider 322 to see if an alternative path exists. If administrative domain 308 is able to transport the leftover 30 Kbits/sec of communication traffic, then network control device 314 can communicate with network control devices 308-312 and reroute only 70 Kbits/sec of the communication traffic through administrative domain 310 while routing the leftover 30 Kbits/sec of communication traffic through administration domain 308. In this manner, terminal 302 receives the guaranteed level of service (PBR of 100 Kbits/sec) when communicating with terminal 304. It is to be understood that while PBR was used in this example, any of the network parameters, or combinations thereof may be utilized in a similar manner.

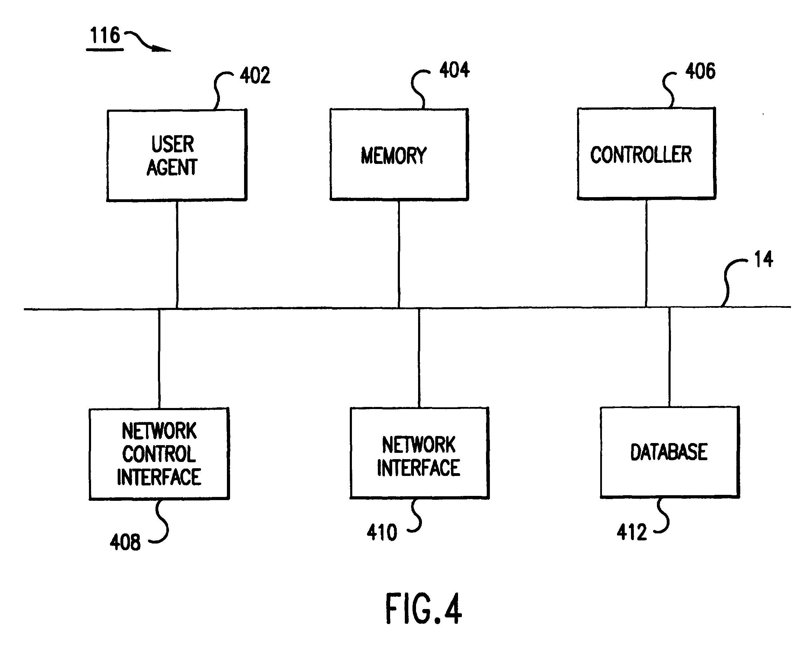

Fig. 4 is a detailed block diagram of the network control device 116. The network control device 116 includes a user agent 402, a memory 404, a controller 406, a network control interface 408, a network interface 410, and a database 412. All of the above components are coupled together by a bus 414.

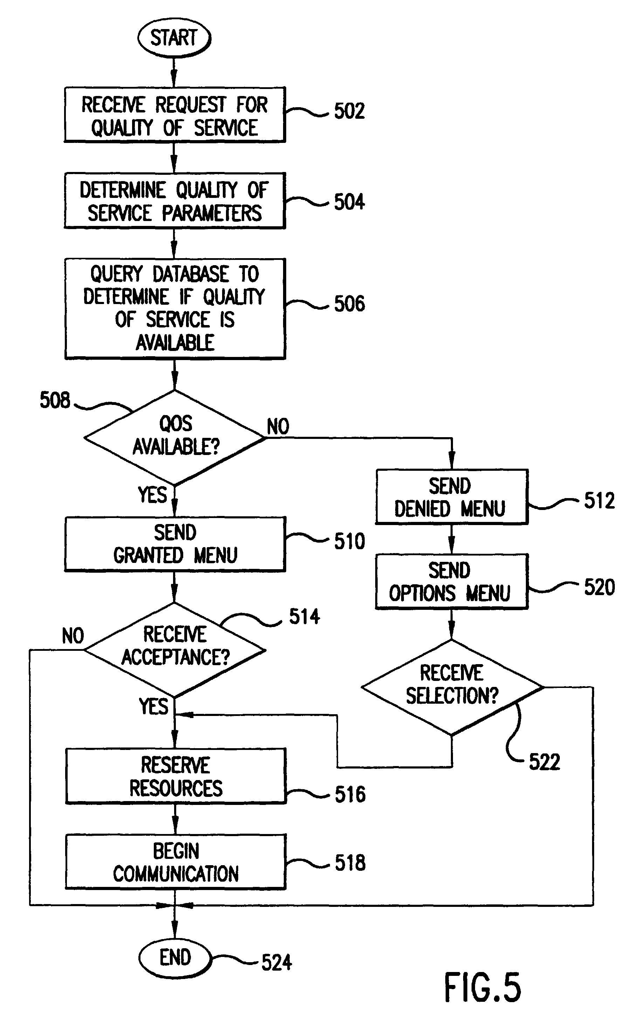

Fig. 5 is an exemplary flowchart describing the operation of the network control device 116. In step 502 a terminal 102-108 transmits a request to the network control device 116. The request is received by the network interface 410 and sent to the user agent 402. The request includes a selection of a particular quality of service.

In step 504, the quality of service request is then translated by the user agent 402 into the various bitrate and delay-error classes, as described above in Tables 2 and 3. The bitrate and delay-error classes, along with the corresponding quality of service parameters (i.e., PBR, SBR, MBR, MBS, BER, EED, and EEDV) can be stored in memory 404.

Once the quality of service parameters are determined, in step 506 the quality of service parameters are sent to the controller 406 which in turn accesses database 412 to see if the network 110 can provide the requested quality of service. The database 412 can include a listing of current available resources available on each of the underlying networks 210-216 which form the network 110. For example, database 412 can contain a listing of the current bandwidth available on each underlying network 210-216.

In order to maintain a current list of resources available on the underlying networks 210-216, the database 412 can be updated on a regular basis by the controller 406. For example, the controller 406 may query the underlying networks 210-216 through the network interface 410 every hour in order to determine the current state of the underlying networks 210-216. In response to the query, each underlying network 210-216 can report back to the controller 406, whereupon the results would be stored in database 412. Additionally, the underlying networks 210-216 can independently report their corresponding states of available resources whenever a state changes or during a time when the underlying networks 210-216 are experiencing a light workload.

In step 508, the controller 406 determines that the network 110 can provide a requested quality of service, and informs the user agent 402 of the availability. If the quality of service is available, the user agent 402 will proceed to step 510 and send the requesting terminal 102-108 a quality of service granted menu; otherwise, if the quality of service is not available, the user agent 402 will proceed to step 512 and send the requesting terminal a quality of service denied menu which includes an indication that the requested quality of service is not available.

In step 514, the user agent 402 prompts the subscriber as to whether the subscriber wishes to proceed to establish a connection. If so, the user agent 402 proceeds to step 516; otherwise, the user agent 402 proceeds to step 524 where the process ends.

In step 516, the user agent 402 instructs the controller 406 to reserve the requested quality of service over the network 110. Accordingly, the controller 406 communicates with the underlying networks 210-216 via the network controller interface 408 and reserves the appropriate resources.

Once the resources have been reserved, the user agent 402 proceeds to step 518 where the terminals 102-108 begin communication.

If the quality of service requested is not available in step 508, in step 512 the user agent 402 presents the terminals 102-108 with the quality of service denied menu. The quality of service denied menu informs a subscriber that the quality of service requested cannot currently be granted.

Additionally, in step 520, the user agent can present the subscriber with other options including a listing of the quality of services which are currently available or of the times when the subscriber can try later and the requested quality of service is more likely to be available.

In step 522, the user agent 402 can prompt a subscriber to select an alternative quality of service. If the subscriber makes a selection then the user agent 402 proceeds to step 516; otherwise, the user agent 402 proceeds to step 524 where the process ends.

In step 516, as described above, the controller 406 reserves the particular resources necessary for providing the selected quality of service. The process then proceeds to step 518 where the subscriber begins communication at the selected quality of service.

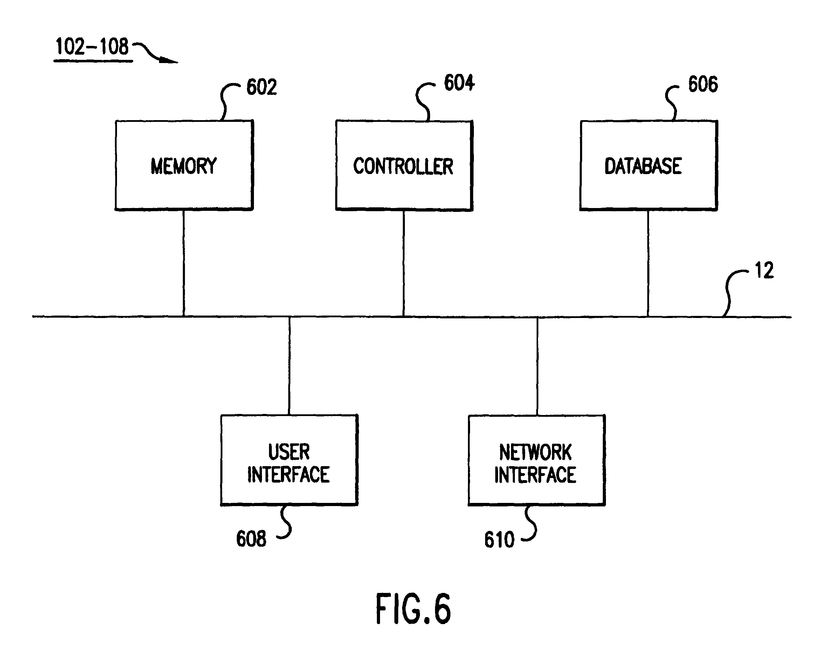

Fig. 6 is a detailed block diagram of the terminals 102-108. The terminals 102-108 include a memory 602, a controller 604, a database 606, a user interface 608, and a network interface 610. All of the above components are coupled together by a bus 612.

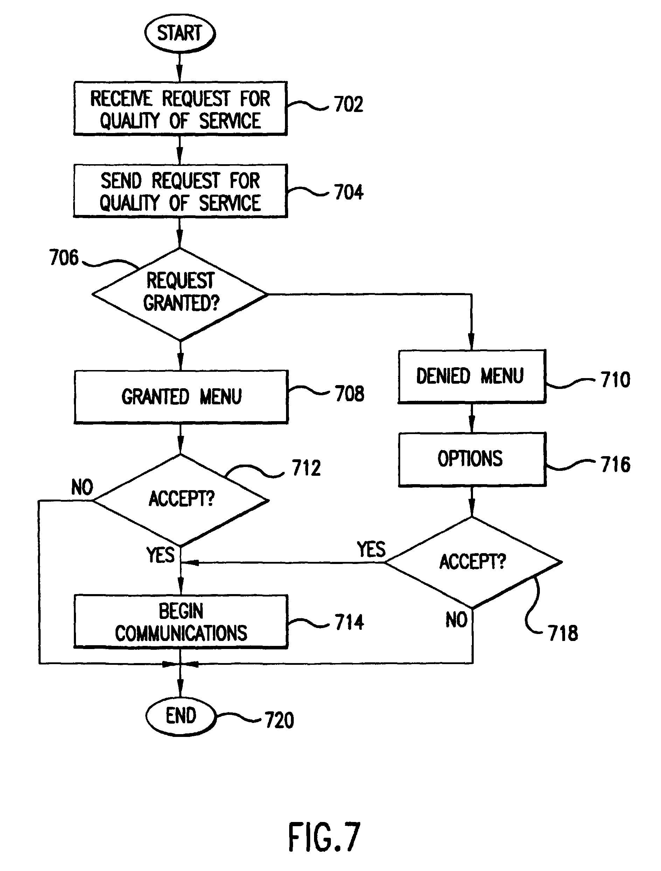

Fig. 7 is an exemplary flowchart of the process of the terminal 102-108. In step 702 the controller 604 receives a request for quality of service through user interface 608.

In step 506 the controller sends the request for quality of service via network interface 610 across network 110 to the network control device 116.

In step 706, the controller 604 waits to receive a reply from the network control device 116. If the controller receives a request granted response, the process then proceeds to step 708 where a granted menu is displayed to the subscriber; otherwise, in step 710 a quality of service denied menu is displayed to the subscriber.

In step 708 a quality of service granted menu is displayed to a subscriber and the subscriber is further prompted on whether they choose to accept the quality of service. In step 712, if the subscriber accepts the quality of service then the process proceeds to step 714 where the communication can begin; otherwise, the process proceeds to step 720 where the process ends.

In step 710 the controller 604 displays a quality of service denied menu to the subscriber through user interface 608. Additionally, in step 716 the controller 604 can also display a list of options pertaining to other types of quality of services that may be currently available, as described above.

In step 718 the subscriber is prompted as to whether or not to accept the substitute services. If the subscriber accepts the services then the controller proceeds to step 714 where the communication will thereafter begin; otherwise, the controller 604 proceeds to step 720 where the process ends.

The functions of the network control device 116 may also be divided between functions of the terminals 108-114 and various network elements or a central network control device such as the network control device 116. Specific implementations of where to place the functions of the network control device 116 are dependent on specific circumstances that may be encountered.

## Claims

1. A method for providing a specified quality of service for multimedia communication over a network, characterized by the steps of:
receiving a quality of service specification for a communication from an end-user, the quality of service specification being expressed as first values of one or more parameters of a predetermined set of network parameters;
converting the first values of the parameters to second values corresponding to each of network elements of the network supporting the communication; and
applying the second values to corresponding network elements.

2. The method of claim 1, further comprising:
analyzing the first values based on network condition information to confirm availability of network resources required to support the communication;
generating alternative quality of service specifications if the network resources are not available to support the communication; and
outputting the alternative quality of service to the end-user.

3. The method of claim 2, further comprising:
monitoring the network to collect the network condition information; and
storing the collected network condition information in a database.

4. The method of claim 2, wherein the network condition information includes one or more of unused bandwidth, network element delay, bit error rate experienced, and data packet drop rate.

5. The method of claim 1, wherein the set of predetermined set of network parameters include at least one of peak bit rate, sustained bit rate, maximum burst rate, end-to-end delay, variable end-to-end delay, and bit error rate.

6. The method of claim 1, wherein the quality of service specification is in terms of a predefined set of classes, each of the classes corresponding to a fixed set of parameters of the predetermined set of network parameters.

7. The method of claim 6, wherein each of the predefined set of classes corresponds to a media type of one or more media types.

8. The method of claim 7, wherein the media types include real time audio, real time video, streaming audio, streaming video, data, and unspecified data.

9. An apparatus for providing a specified quality of service for multimedia communication over a network, characterized by:
an interface;
a controller for receiving a quality of service specification for a communication from an end-user, the quality of service specification being expressed as first values of one or more parameters of a predetermined set of network parameters, converting the first values of the parameters to second values corresponding to each of network elements of the network supporting the communication, and applying the second values to corresponding network elements.

10. The apparatus of claim 9, characterized in that the controller further analyzes the first values based on network condition information to confirm availability of network resources required to support the communication, generates alternative quality of service specifications if the network resources are not available to support the communication, and outputs the alternative quality of service to the end-user.

11. The apparatus of claim 10, characterized in that the controller further monitors the network to collect the network condition information, and stores the collected network condition information in a database.

12. The apparatus of claim 10, characterized in that the network condition information includes one or more of unused bandwidth, network element delay, bit error rate experienced, and data packet drop rate.

13. The apparatus of claim 9, characterized in that the set of predetermined set of network parameters includes at least one of peak bit rate, sustained bit rate, maximum burst rate, end-to-end delay, variable end-to-end delay, and bit error rate.

14. The apparatus of claim 9, characterized in that the quality of service specification is in terms of a predefined set of classes, each of the classes corresponding to a fixed set of parameters of the predetermined set of network parameters.

15. The apparatus of claim 14, characterized in that each of the predefined set of classes corresponds to a media type of one or more media types.

16. The apparatus of claim 15, characterized in that the media types include real time audio, real time video, streaming audio, streaming video, data, and unspecified data.
